# EUROPEAN PATENT SPECIFICATION

(11) **EP 2 241 768 B1**
(45) Date of publication and mention of the grant of the patent: **07.11.2012**
(21) Application number: 09158099.3
(22) Date of filing: 16.04.2009
(51) Int. Cl.: F16B 25/10, B21K 1/56, E04D 3/36, F16B 35/04

(54) **Method for manufacturing a flanged drill screw**
Verfahren zur Herstellung einer Flanschdrillschraube
Procédé de fabrication de vis de forage à bride

(43) Date of publication of application: 20.10.2010
(73) Proprietor: Ipex Beheer B.V., 7468 DC Enter (NL)
(72) Inventor: Meilink, Gerrit Johan, 7468 SJ Enter (NL)
(74) Representative: 't Jong, Bastiaan Jacob

(56) References cited:
- EP-A1- 1 450 054
- WO-A1-01/42669
- AU-A1- 2008 201 262
- DE-B1- 2 611 395

## Description

The invention relates to a method for manufacturing a flanged drill screw according to the preamble of claim 1.

Flanged drill screws are known from DE 2611395, AU 2008201262 or EP 1450054 and are for example used for attaching a plate to a facade or to a roof. The drill screw has typically a drill portion at the tip, with which a hole can be drilled into the plate. The drilled hole is in diameter smaller than the outer diameter of the thread of the screw. This is necessary for the screw to have grip in the underlying base to which the plate is attached.

The hole arranged in the plate is however very tight. Especially if the material of the plate has a substantial coefficient of expansion high stresses can occur around the hole in the plate, resulting possibly in cracks.

The prior art flanged drill screws therefore provide a flange along the shaft. This flange functions as a secondary drill section, which increases the diameter of the hole in the plate. This increased diameter provides some play to account for the expansion and shrinkage of the plate.

According to prior art methods, the flange is arranged to the screw by flattening a portion of the shaft of the screw. This results in a flange, but also in a reduced cross section of the shaft, weakening the screw. It has proven that over time the screw could break at the position of the flange as a result of forces endured by the screw.

It is now an object of the invention to provide a method for manufacturing a flanged drill screw, which resolves the above mentioned problem.

This object is achieved with a method according to the invention as claimed in claim 1

By bulging part of the shaft, additional material is collected out of which the flange can be formed, while keeping the cross section of the shaft intact. So, a flanged drill screw manufactured according to the method of the invention does not comprise a weakened portion, but has substantially an uniform cross section over the length of the shaft of the screw.

An embodiment of the invention comprises the step of arranging a drill portion at the tip of the shaft. With this drill portion, it is possible to drill a hole with the screw itself into the plate to be attached.

Preferably the method comprises the step of arranging a threaded portion at the shaft between the thickening and the tip of the shaft. This thread is adjusted to the type of material into which the screw is inserted. The thread for attachment into wood is different from a thread suitable for attachment into a metal base.

In another embodiment of the method according to the invention two or more flanges are formed out of the thickening, the flanges being evenly distributed over the circumference of the shaft. By evenly distributing the flanges evenly over the circumference, the shaft will be centered during the additional drilling action of the flanges.

With the method according to the invention the thickening is reduced while performing the step of forming at least one flange out of the thickening is. Preferably the thickening is reduced to a diameter substantially equal to the diameter of the shaft.

Yet another embodiment of the method according to the invention, comprising the step of providing a cutting edge at the at least one flange. By providing a cutting edge at the at least one flange, it is ensured that the material through which the screw extends is properly machined and not just merely deformed.

The invention also relates to a flanged drill screw manufactured according to the invention comprising:
- a shaft having a substantially uniform cross section;
- a head arranged at one end of the shaft; and
- at least one flange arranged on the shaft between the head and the other end of the shaft.

It is however possible to provide flanges to the shaft without reducing the thickness of the shaft by other methods. For example a preformed bush with flanged can be shrunk to the shaft.

An embodiment of the invention further comprises:
- a drill portion at the other end of the shaft opposite of the head; and
- a threaded portion arranged between the drill portion and the at least one flange.

The distance of the flange to the tip of the shaft and the relative position of the thread is preferably arranged such, that the secondary drilling action in the plate is performed before the thread is screwed into the material to which the plate is attached. This prevents the thread pulling the flanges through the plate without having a proper secondary drilling action of the flanges.

The invention also relates to a combination of a flanged drill screw according to the invention, a base and a plate, wherein the plate is arranged to the base by the flanged drill screw, the screw extending through the plate and into the base.

An example of such a combination is a roof with corrugated roof plates, wherein the screws are arranged in the corrugated plates at a top the wave shape.

In a preferred embodiment of the combination according to the invention the plate is spaced apart from the base and the distance from the plate to the base is larger than the distance from the at least one flange to the end of the threaded portion adjacent the drill portion.

These and other features of the invention will be elucidated in conjunction with the accompanying drawings.
Figure 1 shows the four steps according to an embodiment of the invention for manufacturing a flanged drill screw.
Figure 2 shows an embodiment of a combination according to the invention.

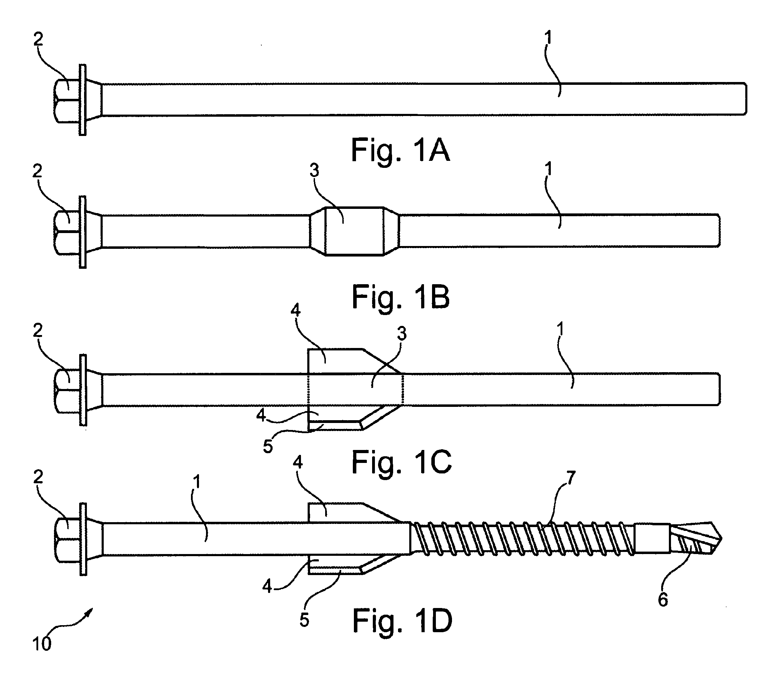

In figure 1A the first step of an embodiment of manufacturing a drill screw according to the invention is shown. In the first step a shaft 1 is provided. This shaft has at one end a hexagonal head 2.

In figure 1B the second step of the method is shown. The shaft 1 is bulged and provided with a thickening 3. Due to the bulging the length of the shaft 1 is reduced, which is clear from the comparison of figures 1A and 1B.

In the third step of the invention, this thickening 3 is then (see figure 1C) flattened such that two flanges 4 are arranged. Due to this flattening the thickening 3 is reduced in cross section, such that it corresponds with the diameter of the remaining shaft 1. The material from this thickening 3 is used for the flanges 4.

Each flange 4 is furthermore provided with a cutting edge 5. This cutting edge 5 ensures a proper machining action when increasing the diameter of a hole in which the shaft 1 extends.

Finally, the shaft 1 is provided at the tip with a drill portion 6. Between the drill portion 6 and the flanges 4, a thread 7 is arranged. The resulting product is a flanged drill screw 10.

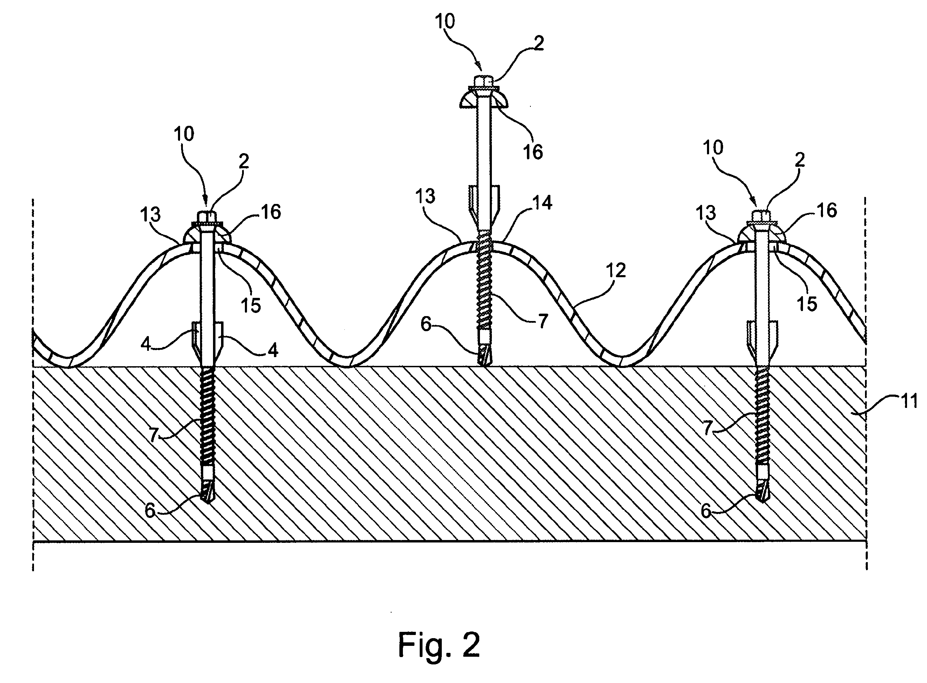

In figure 2 a combination of the invention is shown. This combination has base 11, for example a roof truss, on which a corrugated roof plate 12 is arranged. At the tops 13 of the corrugated roof plate 12, flanged drill screws 10 are inserted.

The drill portion 6 of each flanged drill screw 10 first drills a small hole 14 in the roof plate 12. Then the drill portion 6 proceeds towards the base 11, where it will start to drill a further hole.

At the same time, the flanges 4 will come into contact with the top 13 of the corrugated roof plate 12. These flanges 4 will perform a secondary drilling action resulting in a hole 15 with increased diameter.

After the hole 15 is machined, the flanges 4 will pass the hole 15 and preferably only then the thread 7 of the screw will get into contact with the base 11. Then the screw is screwed into the base 11 and attached the roof plate 12 to the base 11.

Between the head 2 and the roof plate 12 a rubber sealing ring 16 is provided, which seals the hole 15 and accounts for any expansion or shrinkage of the roof plate 12.

## Claims

1. Method for manufacturing a flanged drill screw (10), which method comprises the steps of:
- providing a shaft (1) with a head (2) at one end and a free tip at the opposite end of the shaft;
**characterized by**
- bulging part of the shaft, such that a thickening (3) is formed locally along the length of the shaft (1); and
- forming at least one flange (4) out of the thickening (3).

2. Method according to claim 1, comprising the step of arranging a drill portion (6) at the tip of the shaft (1).

3. Method according to claim 2, comprising the step of arranging a threaded portion (7) at the shaft (1) between the thickening (3) and the tip of the shaft (1).

4. Method according to any of the preceding claims,
wherein two or more flanges (4) are formed out of the thickening (3), the flanges (4) being evenly distributed over the circumference of the shaft (1).

5. Method according to any of the preceding claims, comprising the step of reducing the thickening (3) while performing the step of forming at least one flange (4) out of the thickening (3) is.

6. Method according to claim 5, wherein the thickening (3) is reduced to a diameter substantially equal to the diameter of the shaft (1).

7. Method according to any of the preceding claims, comprising the step of providing a cutting edge (5) at the at least one flange (4).

8. Flanged drill screw (10) manufactured according to the method of one of the claims 1 - 7, comprising:
- a shaft (1) having a substantially uniform cross section;
- a head (2) arranged at one end of the shaft (1); and
- at least one flange (4) arranged on the shaft (1) between the head (2) and the other end of the shaft (1).

9. Flanged drill screw (10) according to claim 8, further comprising:
- a drill portion (6) at the other end of the shaft (1) opposite of the head (2); and
- a threaded portion (7) arranged between the drill portion (6) and the at least one flange (4).

10. Combination of a flanged drill screw (10) according to claim 9, a base (11) and a plate (12), wherein the plate (12) is arranged to the base (11) by the flanged drill screw (10), the screw (10) extending through the plate (12) and into the base (11).

11. Combination according to claim 10, wherein the plate (12) is spaced apart from the base (11) and the distance from the plate (12) to the base (11) is larger than the distance from the at least one flange (4) to the end of the threaded portion (7) adjacent the drill portion (6).

## Patentansprüche

1. Verfahren zur Herstellung einer Flanschbohrschraube (10), wobei das Verfahren die folgenden Schritte umfasst:
- Bereitstellen eines Schafts (1) mit einem Kopf (2) an einem Ende und einer freien Spitze an seinem gegenüberliegenden Ende,
**gekennzeichnet durch**:
- Aufweiten eines Teils des Schafts derart, dass an der Länge des Schafts (1) örtlich eine Verdickung (3) gebildet wird, und
- Bilden mindestens eines Flansches (4) aus der Verdickung (3).

2. Verfahren nach Anspruch 1, den Schritt des Anordnens eines Bohrabschnitts (6) an der Spitze des Schafts (1) umfassend.

3. Verfahren nach Anspruch 2, den Schritt des Anordnens eines Gewindeabschnitts (7) am Schaft (1) zwischen der Verdickung (3) und der Spitze des Schafts (1) umfassend.

4. Verfahren nach einem der vorhergehenden Ansprüche, wobei aus der Verdickung (3) zwei oder mehr Flansche (4) gebildet werden, die gleichmäßig um den Umfang des Schafts (1) verteilt sind.

5. Verfahren nach einem der vorhergehenden Ansprüche, den Schritt des Reduzierens der Verdickung (3), während der Schritt des Bildens mindestens eines Flansches (4) aus der Verdickung (3) ausgeführt wird, umfassend.

6. Verfahren nach Anspruch 5, wobei die Verdickung (3) auf einen Durchmesser reduziert wird, der im Wesentlichen gleich dem Durchmesser des Schafts (1) ist.

7. Verfahren nach einem der vorhergehenden Ansprüche, den Schritt des Bereitstellens einer Schneidekante (5) an dem mindestens einen Flansch (4) umfassend.

8. Flanschbohrschraube (10), die gemäß dem Verfahren nach einem der Ansprüche 1 bis 7 hergestellt ist, Folgendes umfassend:
- einen Schaft (1) mit im Wesentlichen gleichförmigem Querschnitt,
- einen Kopf (2), der an einem Ende des Schafts (1) angeordnet ist, und
- mindestens einen Flansch (4), der am Schaft (1) zwischen dem Kopf (2) und dem anderen Ende des Schafts (1) angeordnet ist.

9. Flanschbohrschraube (10) nach Anspruch 8, ferner Folgendes umfassend:
- einen Bohrabschnitt (6) an dem anderen Ende des Schafts (1), gegenüber dem Kopf (2), und
- einen Gewindeabschnitt (7), der zwischen dem Bohrabschnitt (6) und dem mindestens einen Flansch (4) angeordnet ist.

10. Kombination einer Flanschbohrschraube (10) nach Anspruch 9, einer Basis (11) und einer Platte (12), wobei die Platte (12) durch die Flanschbohrschraube (10) an der Basis (11) angeordnet ist, wobei sich die Schraube (10) durch die Platte (12) und in die Basis (11) erstreckt.

11. Kombination nach Anspruch 10, wobei die Platte (12) von der Basis (11) beabstandet ist und der Abstand von der Platte (12) zur Basis (11) größer ist als der Abstand von dem mindestens einen Flansch (4) zum an den Bohrabschnitt (6) angrenzenden Ende des Gewindeabschnitts (7).

## Revendications

1. Procédé de fabrication d'une vis de forage à bride(s) (10), lequel procédé comprend les étapes consistant à :
- prévoir une tige (1) avec une tête (2) à une extrémité et une pointe libre à l'extrémité opposée de la tige ;
**caractérisé par**
- le renflement d'une partie de la tige de sorte qu'un épaississement (3) soit formé localement sur la longueur de la tige (1) ; et
- la formation d'au moins une bride (4) sur l'épaississement (3).

2. Procédé selon la revendication 1, comprenant l'étape d'aménagement d'une portion de foret (6) à la pointe de la tige (1).

3. Procédé selon la revendication 2, comprenant l'étape d'aménagement d'une portion filetée (7) sur la tige (1) entre l'épaississement (3) et la pointe de la tige (1).

4. Procédé selon l'une quelconque des revendications précédentes, dans lequel deux brides (4) ou plus sont formées sur l'épaississement (3), les brides (4) étant uniformément distribuées sur la circonférence de la tige (1).

5. Procédé selon l'une quelconque des revendications précédentes, comprenant l'étape de réduction de l'épaississement (3) tout en effectuant la formation d'au moins une bride (4) sur l'épaississement (3).

6. Procédé selon la revendication 5, dans lequel l'épaississement (3) est réduit à un diamètre sensiblement égal au diamètre de la tige (1).

7. Procédé selon l'une quelconque des revendications précédentes, comprenant l'étape visant à former un bord de coupe (5) sur la au moins une bride (4).

8. Vis de forage à bride(s) (10) fabriquée selon le procédé de l'une quelconque des revendications 1 à 7, comprenant :
- une tige (1) ayant une section transversale sensiblement uniforme ;
- une tête (2) aménagée à une extrémité de la tige (1) ; et
- au moins une bride (4) aménagée sur la tige (1) entre la tête (2) et l'autre extrémité de la tige (1).

9. Vis de forage à bride(s) (10) selon la revendication 8, comprenant en outre :
- une portion de foret (6) à l'autre extrémité de la tige (1) opposée à la tête (2) ; et
- une portion filetée (7) aménagée entre la portion de foret (6) et la au moins une bride (4).

10. Combinaison d'une vis de forage à bride(s) (10) selon la revendication 9, d'une base (11) et d'une plaque (12), dans laquelle la plaque (12) est aménagée sur la base (11) par la vis de forage à bride(s) (10), la vis (10) s'étendant à travers la plaque (12) et dans la base (11).

11. Combinaison selon la revendication 10, dans laquelle la plaque (12) est espacée de la base (11) et la distance de la plaque (12) à la base (11) est plus grande que la distance de la au moins une bride (4) à l'extrémité de la portion filetée (7) adjacente à la portion de foret (6).
